# EUROPEAN PATENT APPLICATION

(11) **EP 1 625 990 A2**
(43) Date of publication of application: **15.02.2006**
(21) Application number: 05466008.9
(22) Date of filing: 10.08.2005
(51) Int. Cl.: B62B 1/22

(54) **Wheelbarrow**

(30) Priority: 12.08.2004 MY 0403274
(71) Applicant: Prestar Manufacturing SDN BHD, 48000 Rawang, Selangor (MY)
(72) Inventor: Lim, Fong Kan, Lot 39, Rawang Industrial Estate, 48000 Rawang Selangor (MY)
(74) Representative: Danek, Vilem

(57) **Abstract**

The present invention is an improved wheelbarrow with a releasable container connected to a releasable locking system for easy pouring and requiring small leverage to lift the container. The improved wheelbarrow comprising a lever mounted directly on the handle part of the wheelbarrow support frame for easily release the container during removing load process. The lever is joined to a pivotal hook which is mounted on the body of the support frame by a cable. The container includes a fixture on the lower part rear end of the container. This is to secure the container to the releasable locking system when in loading or moving position. With the grasping of the lever, a tension force is formed and thus pulled the pivotal hook backward away from the hooked position. This releases the container from its secured position and can be easily lifted for emptying purposes.

## Description

### Field of the Invention

The present invention relates to wheelbarrow apparatus, and more particularly to a new improved wheelbarrow with a releasable container connected to a releasable locking system for easy pouring and requiring small leverage to lift the container.

### Background of the Invention

Wheelbarrows of numerous different configurations are known in the relevant art. Wheelbarrows can be generally stated as including a container that can receive and carry a quantity of material therein, at least a wheel that supports the tray and allows the tray to be moved with respect to a surface such as the grade, and at least a handle that permits a user to apply force to drive the tray and the wheel to desired locations. Wheelbarrows generally also include one or more legs that can engage the surface on which the wheelbarrow is desired to help support the tray and to retain the wheelbarrow in a given position on the surface.

Wheelbarrows are well known as a tool for moving heavy loads for a short distance. Typically, a wheelbarrow has a container made from sheet metal supported by a forward wheel and two rear legs. The handles are typically formed as a pair of parallel pipes extending to the rear of the container.

The conventional wheelbarrow design suffers from a number of disadvantages. The wheelbarrow handle is normally mounted low which requires a user to bend down of lower the body to loft up a heavily loaded wheelbarrow. This might injure the user's back if care is not taken when lifting up the heavily loaded wheelbarrow. Because the pan is mounted on top of the beams, the center of gravity of a loaded wheelbarrow is relatively high and tends to rise as the weight of the load in the pan is increased. Moreover, when the handles are raised to elevate the rear legs, the center of gravity is raised even higher. This, coupled with the use of a single wheel to support the forward end of the frame, may result in a relatively unstable vehicle, which is difficult to maneuver, and easily overturned.

A prior art, U.S. Pat. No. 6,193,265, design has a handle and two wheels mounted at the front of the wheelbarrow. The handle is convenient for tipping up the wheelbarrow. However, the height of the handle is low, which requires a user to bend down to lift up the wheelbarrow and pull over to release the heavy load. The two front wheels provide better stability when moving the wheelbarrow.

As such, it is an object of this invention to provide a new improved wheelbarrow with container connected to a releasable locking system, which easily release the container for easy pouring and requiring small leverage to lift the container.

### Summary of the Invention

The present invention is an improved wheelbarrow with container connected to a releasable locking system for easy pouring and requiring small leverage to lift the container.

One aspect of the present invention is a wheelbarrow with two wheel assemblies comprising a lever mounted directly on the handle part of the wheelbarrow support frame for easily release the container during removing load process.

In another aspect of the invention, the lever is connected to a pivotal hook that mounted on the wheelbarrow support frame body of the handle by a cable.

According to a further feature of the invention, the container is mounted with a fixture on the lower part rear end of the container and on the same side with the lever. This is to secure the container to the brake system when in attached or released position.

### Brief Description of the Drawings

The invention will be better understood and objects other than those set forth above will become apparent when consideration is given to the following detailed description thereof. Such description makes reference to the annexed drawings wherein:
Figure 1 is a perspective view of the wheelbarrow according to present invention.
Figure 2 is the perspective view of the wheelbarrow when the pivotable hook being release by the lever and the container being released.
Figure 3 is the enlarged view of the pivotable hook clamp to the fixture in a secure position.
Figure 4 is the enlarged view of the pivotable hook being release by the lever and the container in a lifting position in accordance with one aspect of the present invention.
Figure 5 is the perspective view of the wheelbarrow with loading in the moving position.
Figure 6 is the prospective view of the wheelbarrow in the pouring position with the container being lift up.
Figure 7 is the perspective view of the wheelbarrow container being secure back to the support frame while still in the lifting position.
Figure 8 is the perspective view of the wheelbarrow in the empty loading position.

### Detailed Description of the Preferred Embodiment

The present invention is an improved wheelbarrow with releasable locking system connected to the container for easy pouring and requiring small leverage to lift the container.

The principal and operation of wheelbarrows according to the present invention may be better understood with reference to the drawings and accompanying description.

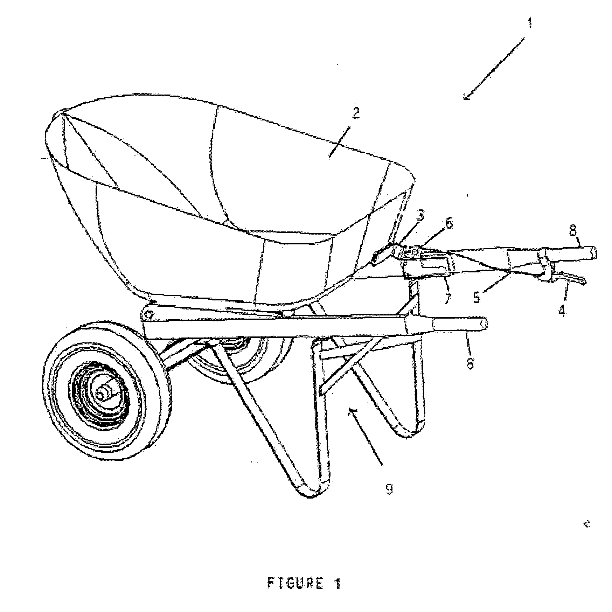

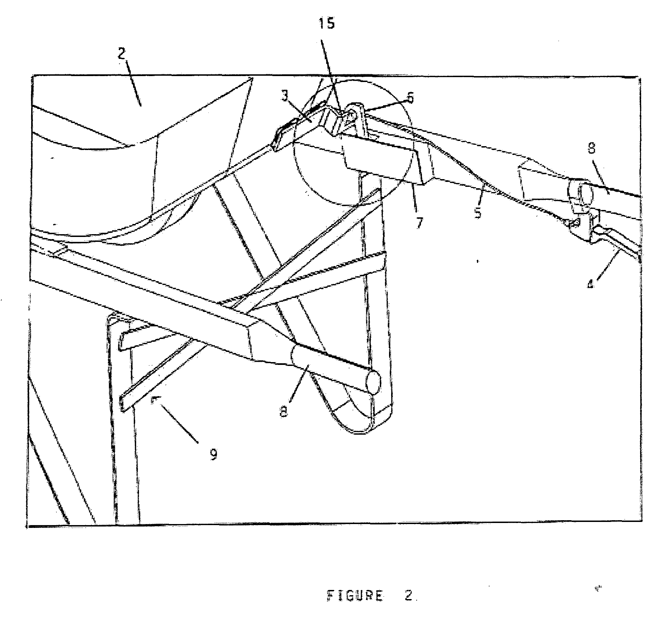

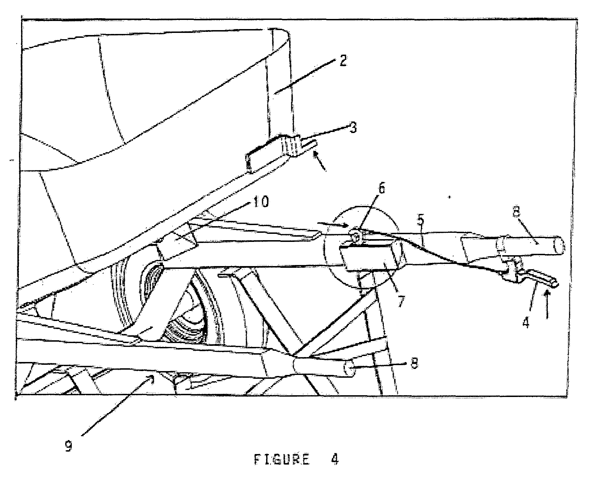

Referring to drawings, figure 1 shows a wheelbarrow, generally designated as numeral 1, constructed and operative according to the teachings of the present invention. Generally speaking, the wheelbarrow (1) has a container (2) of preferably tipped end shape at the front end of the container (2) with a fixture (3) mounted at the lower part of the rear end of the container (2). The container (2) of the wheelbarrow (1) is pivotally mounted to a support frame (9) at the lower part of the front end of the container (2) via a hinge means (10) as shown in figure 3. The fixture (3) includes an extended protrusion (15) from one end of the fixture (3) to be engaged by the pivotable hook (6) as shown in figure 3. A releasable locking system comprising a lever (4) secured at the rear end of the support frame handle (8), a pivotable hook (6) mounted at the body of the handle (8) via a enclosure (7) which is responsive to the lever (4) to engage with the fixture (3) when the container (2) is in attached position and disengage with the fixture (3) when the container is in released position. The enclosure (7) is preferably mounted at the inner side body of the handle (8). The lever (4) is linked to the pivotable hook (6) by a cable (5).

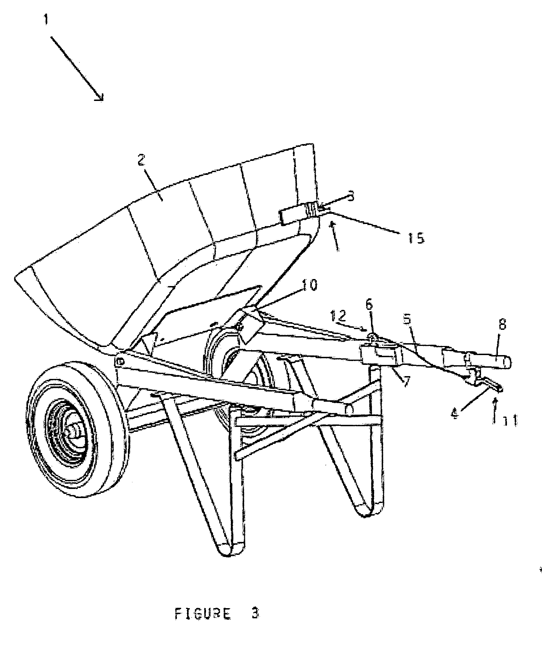

It will be readily apparent that the releasable locking system offers a considerable improvement in functionality over conventional wheelbarrow designs. With reference to figure 2, it will be noted that the wheelbarrow user can easily grasping the lever (4) and thus released the container (2) for lift up to a pouring position without lifting up the whole wheelbarrow (1), thereby minimizing arm strain.

As seen in figure 1 and figure 2, the container (2) is securely hooked to the wheelbarrow (1) support frame (9) with the pivotable hook (6) tightly clamped onto the extended protrusion (15) of the container fixture (3). When a wheelbarrow (1) user grasps to the lever (4) and pull the lever (4), the pivotable hook (6) will be released from the secured clamped position and thus released the wheelbarrow container (2) as shown in figure 4. The container (2) is then free to be lifting and pivoting at the hinge means (10). As shown in figure 4, during the grasping of the lever (4), a tension force (11) is formed and thus pulled the pivotable hook (6) backward (12) away from the hooked position. This releases the container (2) from its secured position. The container (2) can now be easily lifted up by the user and tipping the loading out easily as shown in figure 3. The user can now easily operate the wheelbarrow (1) with a minimum energy used.

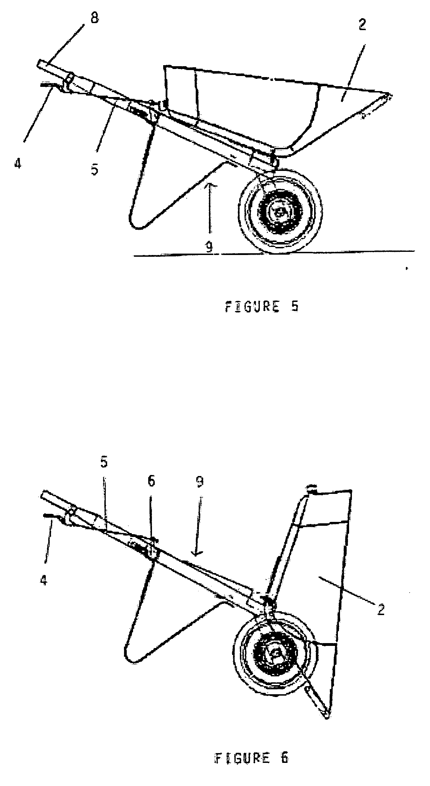

In operation, as shown in figure 5, the container (2) with load (not shown) is seen tightly secured to the support frame (9) of the wheelbarrow (1) in attached position and during transportation. Additionally, the described releasable locking system facilitates tipping of the wheelbarrow (1) for easy pouring as shown in figure 6 and requiring no leverage to lift up the wheelbarrow (1) support frame (9) for emptying the load of the container (2).

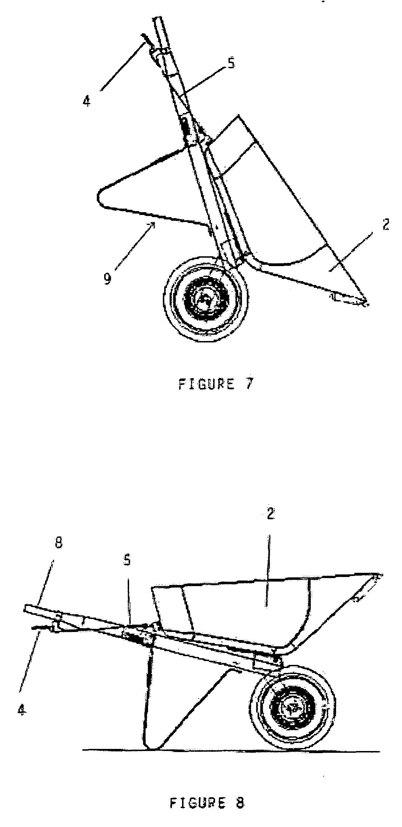

In a lifting up position of the wheelbarrow (1) support frame (9) as shown in figure 7, the container (2) can easily be secured to the wheelbarrow (1) support frame after emptying the load. The fixture (3) will automatically engaged with the pivotal hook (6) by just pushing the handle (8) of the support system (9) towards the container (2). Furthermore, as shown in figure 8, the wheelbarrow (1) with releasable locking system can return to its original ground position with container (2) in the stable position after emptying process.

It is to be understood that the present invention may be embodied in other specific forms and is not limited to the sole embodiment described above. However, modifications and equivalents of the disclosed concepts such as those which readily occur to one skilled in the art are intended to be included within the scope of the claims which are appended thereto.

## Claims

1. A wheelbarrow with releasable container comprising:
a support frame;
a pair of handle connected to said support frame of said wheelbarrow;
a container pivotably mounted to said support frame at the lower part front end of said container;
a fixture mounted at the rear end of said container;
a pivotable hook mounted at the body of said handle; and
a lever disposed at the rear end of said handle, whereby said fixture, pivotable hook and said lever collectively forming a releasable locking system and said pivotable hook is responsive to the lever to engage with said fixture when said container is in attached position and disengage with said fixture when said container is in released position.

2. The wheelbarrow with releasable container as claimed in claim 1, wherein said pivotable hook is linked with said lever via a cable.

3. The wheelbarrow with releasable container as claimed in claim 1, wherein said fixture further includes an extended protrusion from one end of said fixture to be engaged by said pivotable hook.

4. The wheelbarrow with releasable container as claimed in claim 3, wherein said pivotable hook is pivotable mounted at the support frame via an enclosure fixed at the inner surface of the body of said handle.

5. The wheelbarrow with releasable container as claimed in claim 1, wherein said container is preferably with tipped end shape at the front end of said container to enable said container to be rested on the ground when it is in released position.

6. The wheelbarrow with releasable container as claimed in claim 5, wherein said container is pivotally mounted at said support frame with a hinge means.

7. A method of handling the wheelbarrow with releasable container comprising the steps of:
loading said container of the wheelbarrow with load;
releasing said container for emptying the load by grasping the lever of the releasable locking system mounted on the handle of the supporting frame to release the locking between the fixture and the pivotal hook; and
pushing said handle of the supporting frame towards said released container to enable said pivotal hook to lock with said fixture.
